# EUROPEAN PATENT SPECIFICATION

(11) **EP 4 390 050 B1**
(45) Date of publication and mention of the grant of the patent: **15.10.2025**
(21) Application number: 22214858.7
(22) Date of filing: 20.12.2022
(51) Int. Cl.: E21B 7/02

(54) **SURVEY DEVICE FOR DETERMINING A POSITION OF A MINING VEHICLE**
VERMESSUNGSVORRICHTUNG ZUR BESTIMMUNG EINER POSITION EINES BERGBAUFAHRZEUGS
DISPOSITIF DE RELEVÉ POUR DÉTERMINER UNE POSITION D'UN VÉHICULE MINIER

(43) Date of publication of application: 26.06.2024
(73) Proprietor: Sandvik Mining and Construction G.m.b.H., 8740 Zeltweg (AT)
(72) Inventor: GIMPEL, Martin, 8740 Zeltweg (AT); RICHTER, Wolfgang, 8740 Zeltweg (AT)
(74) Representative: Sandvik

(56) References cited:
- WO-A1-2017/063018
- WO-A1-2020/130921
- US-A1- 2012 299 702
- US-A1- 2014 313 502

## Description

### TECHNICAL FIELD

The invention relates to a survey unit for determining the position of a mining vehicle. In mines, underground tunnels are driven by drilling and blasting, and rock material is removed by conveyors and lorries. The excavation work in a mine tunnel often follows the natural structures of the ground. Nowadays, the mining tunnel may be driven according to a predetermined tunnel line designed in the office. Then a tunnelling system is positioned and navigated to reach the planned tunnel. Typically, navigation is based on repeated measurements of the position of the mining vehicle's drill head using a total station that measures the position of prisms attached to the rock surface relative to prisms attached to the drill head. Prisms may also be attached to other machines of the mining equipment to measure their position as well. To measure the position of the mining vehicle or other machines, a trained surveyor must carry a bulky and sensitive survey unit from one measurement point to the next as the mining vehicle or machine moves forward during mining. The new location is then determined by manually surveying several known position points attached to the tunnel wall and the mine vehicle.

### BACKGROUND

Positioning the survey unit on the mine vehicle so that it moves continuously with the mine vehicle and does not have to be carried to a new location in the tunnel is impractical because the measurements are disturbed by the vibrations of the mine vehicle, making them useless for accurate position determination of the mine vehicle. Other systems and methods according to the state-of-the-art require a prepared floor surface of the mine, such as rails or lines to guide and provide a firm stand of the survey unit, which is cumbersome. The prior art document WO 2017/063018 A1 discloses a survey unit for a mining vehicle whereby an optical measurement device (LIDAR) is used to measure a position of the vehicle in an underground mine.

It is an objective of the present invention to overcome the shortcomings of current position measurement methods and provide an improved survey unit.

This object is achieved with a survey unit comprising the features of claim 1, a system comprising the features of claim 8, and a method comprising the features of claim 12.

### SUMMARY OF INVENTION

The survey unit according to the invention comprises an optical measurement device configured to measure a position of a mining vehicle or a support vehicle in the mine, at least part of a coupling means configured to couple the survey unit to the mining vehicle or the support vehicle so that the survey unit can move in association with the movement of the mining vehicle or the support vehicle in a state of coupling between the survey unit and the mining vehicle or the support vehicle and a stand stabilizer mechanism configured to level or stabilize the position of the survey unit on a standing surface in the mine on which the survey unit is positioned.

The standing surface or floor surface of the mine may be covered with debris from excavated bedrock, for example may be covered with a layer of dust, stones or other debris. Once positioned on the standing surface, the survey unit may uncontrollably sink into the dust or stone layer. The stand stabilizer mechanism provides a firm stand of the survey unit on the standing surface of the mine. There is no need to prepare the standing surface for the survey unit, for example by cleaning the surface from the debris, or by preparing rails or other guiding structures.

Achieving a stable position of the survey unit where the survey unit is substantially decoupled from vibrations of the mining vehicle or support vehicle improves the conditions of measurement of the position of the mining vehicle in the mine and leads to better measurement results with higher accuracy. Since the positioning of the survey unit and the measurements carried out with the survey unit can be done without human interaction a reduction of workload and costs can be achieved. It is understood that a state of decoupling between the survey unit and the mining vehicle or the support vehicle is achieved when the survey unit is physically disconnected and mechanically decoupled from the mining vehicle or support vehicle, or despite being physically connected and mechanically coupled, the survey unit is displaceable relative to the mining vehicle or support vehicle to a position such that no vibration of the mining vehicle or support vehicle is transmitted to the survey unit. An example for the latter situation is, for example, when the survey unit is coupled or suspended to the mining vehicle or support vehicle through a chain or cable or spring, the chain or cable or spring may become slack or un-tensioned once the survey unit is substantially lowered and positioned on the standing surface.

Furthermore, the survey unit can be secured in a parking position during machine excavation, thereby providing a protection of the sensitive optical measurement device during excavation and leaving space for working personnel in the tunnel. The survey unit can also be easily decoupled from the mining vehicle when in a working position, which reduces the influence of vibrations of the mining vehicle on the optical measurement device and hence, improves the measurement precision and reliability.

The optical measurement device may be a total station, in particular a robotic total station, and may comprise an electronic distance meter, an electronic theodolite, and a microprocessor.

According to an embodiment the stand stabilizer mechanism is a levelling mechanism including a vibrator device mounted on the survey unit and configured to vibrate the survey unit so that the survey unit achieves a stable position on the standing surface. A brief vibration of the surveying unit causes the surveying unit to no longer rest unstably on individual stones or rubble. The vibrator or shaker device may be an ultrasound device or a device with rotating eccentric weights, or any other device capable of generating vibrations.

According to another embodiment the stand stabilizer mechanism is a device with moving or rotating parts to move away loose material on the ground so that the survey unit achieves a stable position on the standing surface. The device with moving or rotating parts can be a drill device, a conical drill device, a device with a rotating pin with flanges, a sweeping machine or a suction machine. Drilling through a layer of stones or removing stones from a solid ground surface improves the stability of the survey unit during measurements. The device with moving or rotating parts is preferably mounted to one or more stands of the survey unit.

According to a further embodiment the stand stabilizer mechanism is a device mounted on the mining vehicle or the support vehicle that is configured to exert a force on the survey unit to press the survey unit into the standing surface so that the survey unit achieves a stable position on the standing surface. Pressing the survey unit into the footprint causes the survey unit to sink into a loose surface of rocks or boulders and have better stability.

According to an embodiment, the device mounted on the mining vehicle configured to exert force on the survey unit to press the survey unit into the standing surface may be a hydraulic level arm. In an embodiment, the device mounted on the mining vehicle configured to exert force on the survey unit to press the survey unit into the standing surface comprises one or more pressure sensors for adjusting the exerted force on the survey unit.

According to an embodiment, the coupling means is configured to mechanically couple the survey unit to the mining vehicle or to the support vehicle so that the survey unit is physically connected to the mining vehicle or the support vehicle and can be transposed in the mining vehicle or support vehicle.

In this way, the survey unit can be transposed in and with the mining vehicle or support vehicle, avoiding the need to motorize the survey unit for self-propelling. As another advantage, mechanical coupling of the survey unit to the mining vehicle or support vehicle by the coupling means facilitates securing the sensitive optical measurement device in a parking position in the mining vehicle or support vehicle.

In an embodiment the coupling means can be a movable lift rack mounted to the mining vehicle or support vehicle and capable to engage with the survey unit. The lift rack can be implemented in different ways including a fork-like lift rack or a lift rack having a U or V-shape structure. In an embodiment the coupling means comprises a swingable or rotatable lever arm for moving the survey unit to and from the mining vehicle or support vehicle. The lever arm can be driven by a hydraulic engine.

In an embodiment, the coupling means is configured to couple the survey unit to one or both of the mining vehicle and support vehicle by an electromagnetic or acoustic signal, the coupling means being configured to communicate with one or both of the mining vehicle and support vehicle.

According to an embodiment, one or more of the coupling means, mining vehicle or support vehicle comprise one or more sources for generating an electromagnetic or acoustic signal. Additionally, one or more of the coupling means, mining vehicle or support vehicle comprise one or more sensors for detecting the electromagnetic or acoustic signal. In an embodiment, one or more of the coupling means, mining vehicle or support vehicle comprises at least one photodetector, such as a photodiode, camera, or acoustic transducer such as an ultrasonic sensor configured to send and receive ultrasonic pulses. Correspondingly, one or more of the coupling means, mining vehicle or support vehicle comprises a light source such as a laser or a plate for reflecting sound waves. According to a further embodiment, the survey unit, particularly the coupling means, and the mining vehicle or support vehicle each comprise a communication module such as a wireless communication module. The coupling means may communicate a successful coupling of the survey unit to the mining vehicle or support vehicle. However, a connection via cables is also possible.

Coupling of the survey unit to the mining vehicle or support vehicle and communication of the coupling means with the mining vehicle or support vehicle facilitates the survey unit to move in association with the movement of the mining vehicle or support vehicle. As an advantage, electromagnetic or acoustic signaling enables coupling of the survey unit to the mining vehicle or support vehicle without the need for complex mechanical mechanisms or complex modifications to the mining vehicle or support vehicle.

According to an embodiment, the survey unit is self-propelled and comprises a distance measurement device configured to maintain a predetermined distance between the survey unit and one or both of the mining vehicle or support vehicle during its movement.

The survey unit may be a motorized robot capable of self-propelling on the floor surface of the mine. The survey unit may comprise means for energy storage such as battery, and a microprocessor. According to an embodiment, the survey unit is configured to move to a parking position in the mine away for recharging. Parking next to the mining vehicle or support vehicle and recharging via the mining vehicle or support vehicle can also be possible. According to another embodiment, the distance measurement device is a mechanical arm configured to slide alongside the mining vehicle or support vehicle on a surface of the mining vehicle such as guide rail. Alternatively, the distance measurement is an optical or acoustic distance measurement device.

According to an embodiment, the survey unit is configured to detect a mark on the mining vehicle by use of a camera and the survey unit is configured to match its speed of self-propelling to follow the mark while maintaining a predetermined distance to the mining vehicle during its movement. According to an embodiment, the survey unit is configured to point a laser signal towards the mining vehicle and the survey unit is configured to move alongside the mining vehicle until a sensor mounted onto the mining vehicle detects the laser signal. The mining vehicle is then configured to communicate the detection of the laser signal to the survey unit for establishing a state of coupling of the survey unit and the mining vehicle.

Once successfully coupled, the survey unit is then configured to match its speed of self-propelling so that the detection of the laser signal and consequently, the state of coupling is maintained.

It is also conceivable that the vehicle is configured to detect a mark on the survey unit or point a laser to the survey unit. The survey unit may comprise a sensor configured to detect a laser signal emitted from the vehicle and the survey unit is configured to adjust its speed so that the detection of the laser signal at the survey unit is maintained for upholding the state of coupling. Furthermore, for the follow and control operation described it would be possible to use sensors already present in the survey unit such as sensors present in a total station mounted on the survey unit. A coupling of the survey unit can also be established with another vehicle such as a support vehicle in the same way.

In yet another embodiment, the survey unit further comprises at least one stand configured to be in direct contact with the standing surface on which the survey unit can be positioned when the survey unit is in the decoupled state. More specifically, the at least one stand is comprised and arranged in the survey unit so that the stand is in direct contact with the standing surface once the survey unit is positioned on the standing surface in the decoupled state. The at least one stand may be exchangeable. According to an embodiment, the survey unit comprises multiple stands. According to yet another embodiment, a stand has the form of a plate or pin. According to an embodiment the stand is configured to be retractable.

The form of the stands can be matched to the properties of the standing surface or floor surface of the mine. For example, if a dust layer covering the standing surface is relatively thick, a plate-form of the stands may be preferred over a pin-form. If the standing surface is rocky, a pin-form of the stands may be preferred over a plate-form.

According to an embodiment, the leveling mechanism is configured to first level the survey unit before the optical measurement device starts a measurement process. In yet another embodiment, the survey unit is further configured to first determine whether the leveling was successful before the optical measurement device starts a measurement process.

According to an embodiment, the survey unit is further configured to monitor the survey unit once positioned on the standing surface. In an embodiment, the survey unit further comprises a sensor for quantitatively measuring vibrations the survey unit is subjected to. This may enable the survey unit to detect an unintended impact with another object on the site in the decoupled state, upon which the survey unit may be configured to repeat the leveling process and the measurement. In an embodiment, the survey unit is configured to repeat the leveling process and the measurement upon detecting unexpected vibrations.

In another embodiment, the survey unit comprises a sensor, such as an inertial navigation sensor or gyro sensor, capable of detecting a movement and determining a horizontal orientation of the survey unit after leveling. In case a movement of the survey unit is detected after leveling or a determined inclination of the survey unit relative to the standing surface exceeds a maximum threshold, the measurement may be aborted or rejected. The survey unit may then be configured to repeat the leveling or provide an error signal to an operator.

According to yet another embodiment, the survey unit further comprises an automatic tripod onto which the optical measurement device is mounted.

The invention further provides a system for locating a mining vehicle in a mine, comprising the above-described survey unit and the mining vehicle or the support vehicle configured for coupling with the survey unit.

Correspondingly, in its embodiments, the system for locating a mining vehicle in a mine comprises the additional features as described above regarding the survey unit.

In an embodiment, the survey unit is powered by a wired connection to the mining vehicle or the support vehicle. Alternatively, the survey unit comprises energy storage means such as a battery.

According to an embodiment, the mining vehicle or support vehicle comprises a lever arm or cable winch to couple with and lift the survey unit. The lever arm may comprise the coupling means described above which can be a movable lift rack mounted to the mining vehicle or support vehicle and capable to engage with the survey unit or a part thereof.

In particular, the lever arm of the mining vehicle is configured to couple with the coupling means of the survey unit and to lift the survey unit off the standing surface. The lever arm is further configured to place the survey unit on the standing surface of the mining or support vehicle and to decouple from the coupling means of the survey unit. According to an embodiment, the lever arm is configured to move the survey unit in a plane perpendicular to the standing surface. In yet another embodiment, the lever arm is further configured to move the survey unit in a plane that is in parallel to the standing surface or floor surface of the mine, which is particularly advantageous for position measurements in a curved tunnel.

In an embodiment, one or more cables are affixed to the survey unit. The cable winch of the mining vehicle is configured to wind up the one or more cables to couple with and lift the survey unit, and to lower and decouple the survey unit by relaxing the cable. Alternatively, the survey unit comprises skids configured to slide on the floor surface of the mine and the mining vehicle comprises a cable winch configured to pull the survey unit alongside the mining vehicle in association with the movement of the mining vehicle in a state of coupling, i. e. the cable is wound up, and to decouple the survey unit by relaxing the cable.

In yet another embodiment, the system further comprises a first plurality of prisms configured for a mounting to a wall of the mine or another static surface in the mine; and a second plurality of prisms mounted to the mining vehicle, wherein the optical measurement device is configured to radiate light on one or more prisms of the first plurality of prisms and the second plurality of prisms and to receive light reflected therefrom. Additionally, at least one prism may be mounted to the survey unit so that a null position of the survey unit can be determined.

In an embodiment, the mining vehicle comprises a movable borer mining device including an excavation head and a movable supply, auxiliary or conveying device coupled to the borer mining device, wherein the survey unit is configured to determine a position of the mining device such as during excavating operation or in an idle state. The borer mining device can be a borer miner, roadheader, continuous miner or any other miner. According to an embodiment, one or more prisms of the second plurality of prisms are mounted to the borer mining device.

Navigation of the mining vehicle may be based on repeated measurements of the position of the mining vehicle's borer mining device using the optical measurement device that determines its distance and angular position relative to the one or more prisms of the first plurality prisms mounted to the wall of the mine and further determines its distance and angular position relative to the one or more prisms of the second plurality of prisms attached to the mining vehicle. The optical measurement device may be configured to determine its position relative to a prism by calculating a distance between the optical measurement device and the prism as a function of a time between radiating light and receiving the reflected light. Additionally, the optical measurement device may be configured to determine its position relative to a prism by measuring horizontal and vertical angles of the prism to the optical measurement device. If the absolute position of the one or more prisms of first plurality of prisms in the mine is known, the absolute position of the survey unit in the mine and consequently, the absolute position of the one or more prisms from the second plurality of prisms mounted to the mining vehicle can be determined. In this way, the absolute position and orientation of the borer mining device in the mine can be determined. According to an embodiment, the position and orientation of the borer mining device is communicated to the mining vehicle for machine control.

According to an embodiment, the optical measurement device is configured to scan a predetermined field of view in the estimated direction of the first or second plurality of prisms with a vertical fan laser for targeting of the one or more prisms. The optical measurement device then starts the measurement process for a targeted prism by sending the light in the direction of the targeted prism.

The mining vehicle may be configured to move with a constant speed in the range of 0.05 to 1 meter per minute while excavating hard rock but can also be 10- 20 times faster in soft rock. A typical mining speed is 0,6 meter / minute. The mining vehicle may also excavate according to stepwise place change operation including steps of stopping the miner, scanning the tunnel wall, mining with a telescopic arm, moving the miner for 0,5-2 meters, scanning again, mining again etc.

According to an embodiment, the survey unit is configured to determine a position of the mining vehicle while excavating, thereby avoiding an interruption of excavation.

Alternatively, the mining vehicle is configured to stop moving while the survey unit performs a position measurement, thereby improving the measurement precision. The mining vehicle may be configured to excavate and move for 20 meters before a step of position determining is repeated if a gyroscope is used. Without use of a gyroscope the distance of movement before a new position measurement is made is shorter and typically 10 meters.

According to the invention, a method for locating a mining vehicle in a mine comprises coupling a survey unit to the mining vehicle so that the survey unit moves in association with the movement of the mining vehicle in a state of coupling between the survey unit and the mining vehicle. The method further comprises positioning the survey unit on a standing surface separated from the mining vehicle. The method also comprises stabilizing the position of the survey unit on the standing surface on which the survey unit is positioned. The method comprises measuring by the survey unit a position of the mining vehicle in the mine.

Stabilizing the survey unit so that the survey unit achieves a stable position on the standing surface facilitates providing a firm stand of the survey unit on the standing surface or floor surface of the mine, which may be covered with debris from excavation. Consequently, there is no need to prepare the standing surface of the mine for the survey unit, for example by cleaning the surface from the dust or rocks, or by preparing rails or other guiding structures. Furthermore, positioning the survey unit on a standing surface separated from the mining vehicle and decoupling the survey unit from the mining vehicle may enable reducing the influence of vibrations of the mining vehicle on the measurement, thereby improving the measurement precision and reliability.

In its embodiments, the method may comprise the additional features as described above regarding the survey unit and the system for locating a mining vehicle in the mine.

According to an embodiment stabilizing the position of the survey unit on the standing surface on which the survey unit is positioned comprises vibrating the survey unit so that the survey unit achieves a stable position on the standing surface, moving away loose material on the ground so that the survey unit achieves a stable position on the standing surface, or exerting a force on the survey unit to press the survey unit into the standing surface.

The moving of loose material can be achieved with a device with moving or rotating parts such as a drill device, a conical drill device, a device with a rotating pin with flanges, a sweeping machine or a suction machine.

According to an embodiment, coupling the survey unit to the mining vehicle comprises mechanically coupling the survey unit to the mining vehicle so that the survey unit is physically connected to the mining vehicle and is positioned in the mining vehicle.

In a further embodiment, coupling the survey unit to the mining vehicle comprises coupling the survey unit to the mining vehicle by an electromagnetic or acoustic signal and communicating with the mining vehicle via the electromagnetic or acoustic signal. The survey unit may be self-propelled and maintains a predetermined distance between the survey unit and the mining device while moving.

In an embodiment, measuring a position of the mining vehicle in the mine includes radiating light by an optical measurement device on one or more prisms of a first plurality of prisms mounted in the mine and on one or more prisms of a second plurality of prisms mounted on the mining vehicle and to receive light reflected therefrom.

### BRIEF DESCRIPTION OF THE DRAWINGS

Further features, characteristics and benefits of the invention result from the following description of embodiments of the invention in combination with the drawing in which
- Fig. 1: shows a mining system according to an embodiment of the invention;
- Fig. 2: shows a survey unit according to a first embodiment of the invention in a perspective view;
- Fig. 3: shows the survey unit according to the first embodiment in a top view;
- Fig. 4: shows the survey unit according to the first embodiment in aside view;
- Fig. 5: shows a survey unit according to a second embodiment of the invention in a perspective side view.

### DETAILED DESCRIPTION

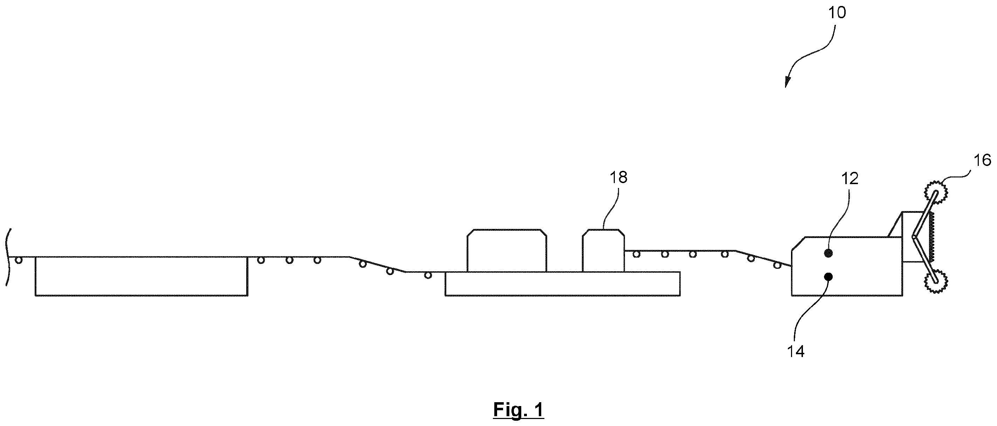

Fig. 1 shows a mining system according to a first embodiment of the invention. The mining system comprises a mining vehicle 10 and a survey unit. The mining vehicle 10 comprises a movable borer mining device 16 including an excavation head and a movable supply device 18 coupled to the borer mining device 16. The survey unit comprises an optical measurement device or total station configured to determine a position of the mining vehicle 10, and more particularly the borer mining device 16. The system comprises a first plurality of prisms configured for a mounting to a wall of the mine; and a second plurality of prisms 12, 14 mounted to the mining vehicle 10, wherein the optical measurement device is configured to radiate light on one or more prisms of the first plurality of prisms and the second plurality of prisms 12, 14 and to receive light reflected therefrom for position determining.

The mining vehicle 10 can be navigated by repeatedly measuring the position of the mining vehicle's borer mining device 16 using the optical measurement device that determines the position of the survey unit relative to one or more prisms of the first plurality prisms mounted to the wall of the mine and further determines the position of one or more prisms of the second plurality of prisms 12, 14 attached to the mining vehicle 10 relative to the survey unit. This enables determining the position and orientation of the borer mining device 16. The position and orientation of the borer mining device 16 can then be communicated to the mining vehicle 10 for machine control.

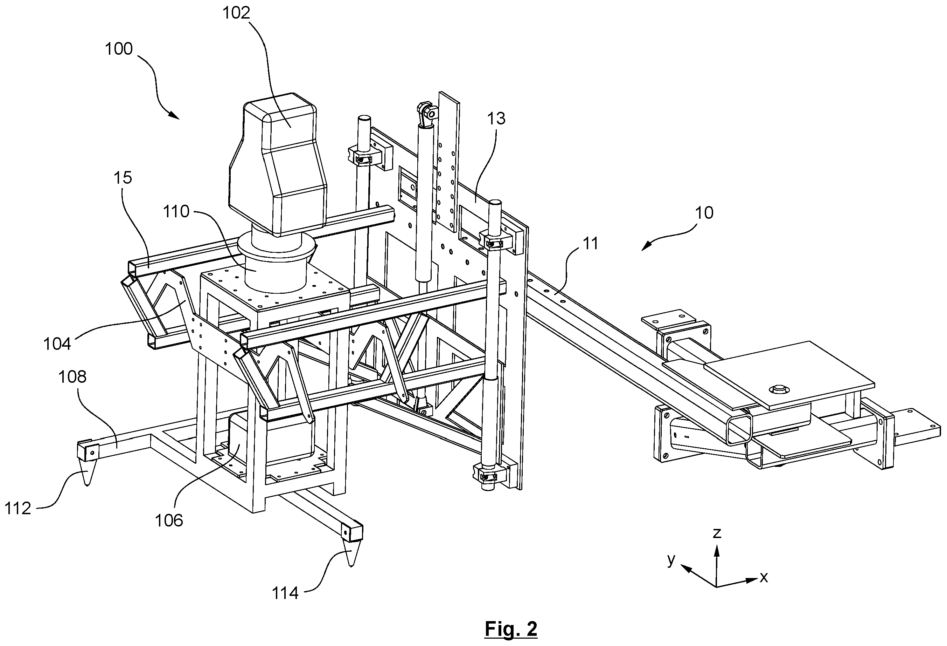

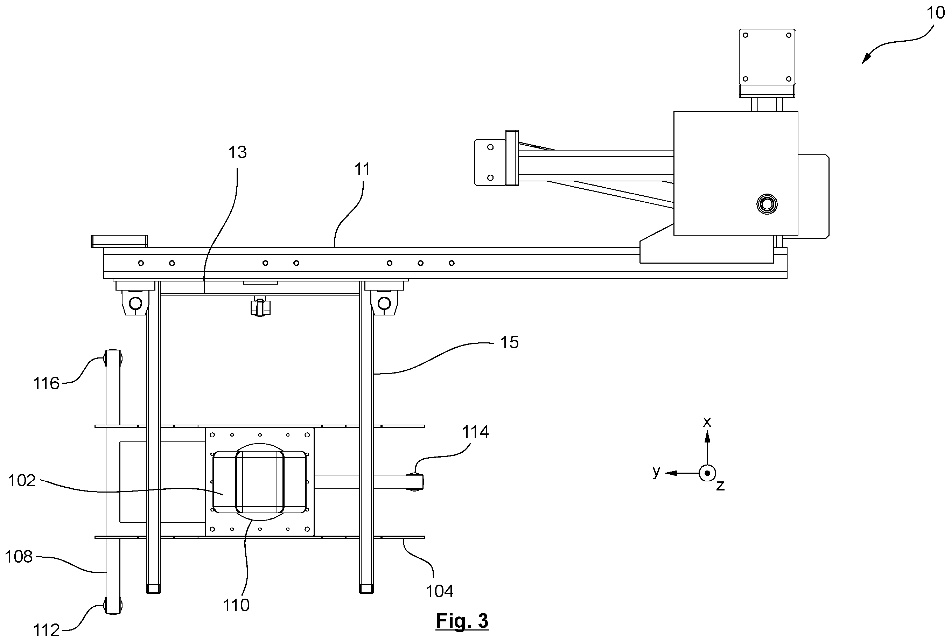

Figs. 2 to 4 show a survey unit 100 according to an embodiment of the invention. The survey unit 100 comprises an optical measurement device or total station 102 configured to measure a position of a mining vehicle 10 in the mine. The optical measurement device 102 is a total station, preferably a robotic total station. The optical measurement device 102 may comprise an electronic distance meter, an electronic theodolite, and a microprocessor.

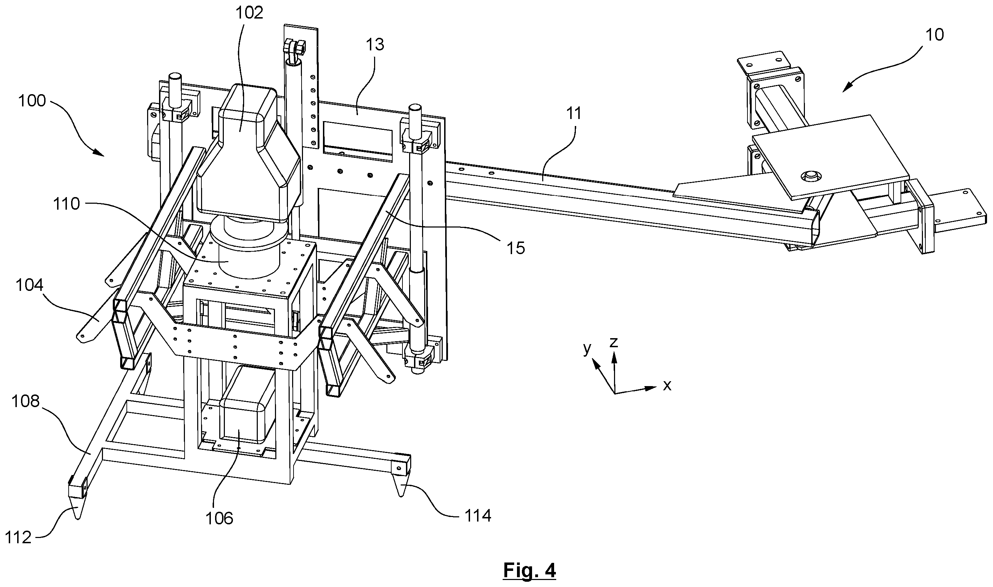

The survey unit 100 further comprises at least part of a coupling means 104 configured to couple the survey unit 100 to the mining vehicle 10 so that the survey unit 100 can move in association with the movement of the mining vehicle 10 in a state of coupling between the survey unit 100 and the mining vehicle 10, and can be positioned on a standing surface separated from the mining vehicle 10 in a decoupled state (as shown in Figs. 2 and 4).

According to the embodiment shown, the survey unit 100 comprises a platform 108 or frame body onto which the optical measurement device 102 is mounted. The platform 108 comprises several stands 112,114,116 configured to be in direct contact with the standing surface on which the survey unit 100 can be positioned in the decoupled state, enabling the survey unit to be adjustable to the surface properties of the standing surface or floor surface of the mine. According to the embodiment shown, the stands 112,114,116 have a pin-form. However, the stands can also have another shape such as a flat or disk-shaped form.

The mining vehicle 10 comprises a lever arm 11 and a hydraulic lifting platform 13 to couple with and lift the survey unit 100. The lever arm 11 and the lifting platform 13 of the mining vehicle 10 are configured to couple with the coupling means 104 of the survey unit to lift the survey unit 100 off the standing surface and to place the survey unit 100 on the standing surface of the mine. The lifting platform 13 is configured to move the survey unit 100 in a plane perpendicular to the standing surface. Additionally, as presented in Fig. 4, the lever arm 11 is configured to move the survey unit 100 in a plane that is in parallel to the standing surface or floor surface of the mine, which is particularly advantageous for position determining in a curved tunnel where the line of sight of the optical measurement device can be obstructed by the curved tunnel walls or by the mining vehicle. As presented in Fig. 2 and Fig. 4, the coupling means 104 comprises one or more centering flanges capable of encompassing respective one or more extensions of the lifting platform 13. According to the embodiment shown, the one or more centering flanges and the one or more extensions of the lifting platform 13 may have a so-called double V-shape, enabling the coupling means 104 and the lifting platform 13 to interlock and self-center the survey unit 100 when the survey unit 100 is picked up by the lever arm 11 and lifting platform 13 for coupling the survey unit 100 to the mining vehicle 10. Hence, the coupling means 104 is configured to mechanically couple the survey unit 100 to the mining vehicle 10 so that the survey unit 100 is physically connected to the mining vehicle 10 and can be transposed in the mining vehicle 10. In this way, the survey unit 100 and its sensitive optical measurement device 102 can be secured in a parking position during machine excavation and can be easily decoupled from the mining vehicle 10 in a working position, which reduces the influence of vibrations of the mining vehicle 10 on the optical measurement device 102 and improves the measurement precision and reliability.

The survey unit 100 further comprises a levelling mechanism configured to level the position of the survey unit 100 on the standing surface on which the survey unit 100 can be positioned. The levelling mechanism is a vibrator device 106 mounted on the survey unit 100 and configured to vibrate the survey unit 100 so that the survey unit 100 achieves a stable position on the standing surface. Additionally, or alternatively, the leveling mechanism is a device mounted on the mining vehicle 10 that is configured to exert a force on the survey unit 100 to press the survey unit 100 into the standing surface. According to the embodiment shown, the device is one or more extensions or lever arms 15 of the hydraulic lifting platform 13 and may comprise one or more pressure sensor (not shown) to facilitate adjusting the exerted force on the survey unit 100. The standing surface or floor surface of the mine may be covered with debris from excavated bedrock, for example may be covered with a layer of dust or other debris. The vibrator device 106 and the one or more extensions 15 of the lifting platform 13 provide a firm stand of the survey unit on the standing surface of the mine and reduce the risk of an uncontrolled sinking of the survey unit into the layer of debris on the standing surface. Hence, there is no need to prepare the standing surface of the mine for the survey unit, for example by cleaning the surface from the debris, or by preparing rails or other guiding structures.

Alternatively of in addition the survey unit may comprise a stand stabilizer mechanism such as a device with moving or rotating parts to move away loose material on the ground so that the survey unit achieves a stable position on the standing surface. The device with moving or rotating parts can be a drill device, a conical drill device, a device with a rotating pin with flanges, a sweeping machine or a suction machine. Drilling through a layer of stones or removing stones from a solid ground surface improves the stability of the survey unit during measurements. The device with moving or rotating parts is preferably mounted to one or more of the stands of the survey unit.

The survey unit 100 may further comprise an automatic tripod 110 onto which the optical measurement device 102 is mounted, wherein the automatic tripod 110 is arranged between the platform 108 and the optical measurement device 102 and is configured to adjust a horizontal orientation of the optical measurement device 102.

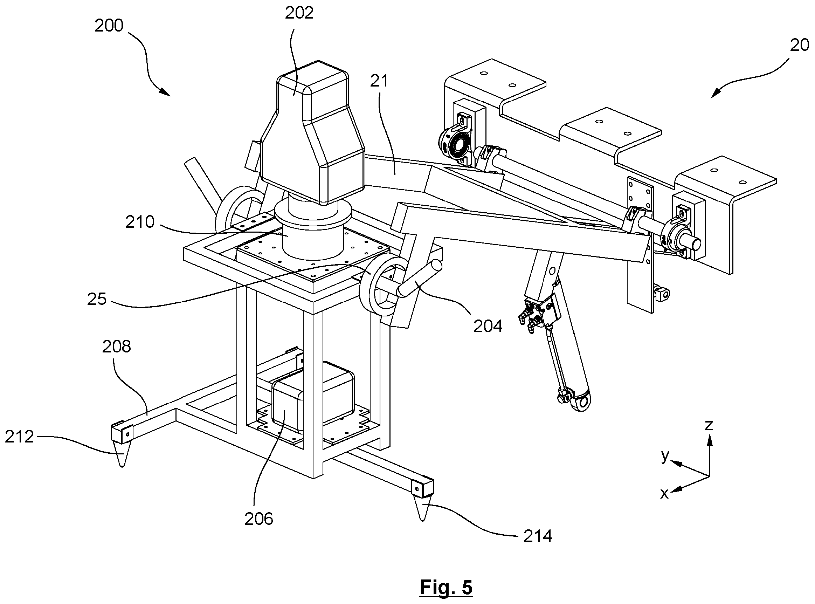

Fig. 5 shows a survey unit 200 according to a second embodiment of the invention. The survey unit 200 comprises an optical measurement device or total station 202 configured to measure a position of a mining vehicle 10 in the mine. The survey unit 200 further comprises a coupling means 204 configured to couple the survey unit 200 to the mining vehicle 10 so that the survey unit 200 can move in association with the movement of the mining vehicle 10 in a state of coupling between the survey unit 200 and the mining vehicle 10 and can be positioned on a standing surface separated from the mining vehicle 10 in a decoupled state (as illustrated in Fig. 5). The survey unit 200 comprises a platform or frame body 208 onto which an automatic tripod 210 and the optical measurement device 202 is mounted. The platform 208 further comprises several pin-shaped stands 212,214,216 configured to be in direct contact with the standing surface on which the survey unit 200 can be positioned in the decoupled state. According to the embodiment shown, the coupling means 204 are one or more cylindrical bodies extending from the platform 208.

The mining vehicle 10 comprises a hydraulic lever or swivel arm 21 to couple with and lift the survey unit 200. The lever arm 21 is configured to couple with the coupling means 204 of the survey unit to lift the survey unit 200 off the standing surface and to decouple from the coupling means 204 of the survey unit 200 to place the survey unit 200 on the standing surface. The lever arm 21 is configured to move the survey unit 200 in a plane perpendicular to the standing surface. The lever arm 21 comprises one or more flange rings 25 encompassing the coupling means 204 or cylindrical extensions of the survey unit 200, i.e., a flange ring 25 may have an inner diameter that is larger than an outer diameter of the coupling means 204 or cylindrical extensions of the survey unit 200 so that the coupling means 204 of the mining vehicle 200 can be enclosed by the flange ring 25 of the mining vehicle 10. Hence, the coupling means 204 and flange ring 25 are configured to mechanically couple the survey unit 200 to the mining vehicle 10 so that the survey unit 200 is physically connected to the mining vehicle 10 and can be transposed in the mining vehicle 10. The flange ring 25 further has an inner diameter large enough to enable a mechanical decoupling of the survey unit 200 from the mining vehicle 10.In this way, the survey unit 200 and its sensitive optical measurement device 202 can be secured in a parking position during machine excavation and can be easily decoupled from the mining vehicle 10 when in a working position, which reduces the influence of vibrations of the mining vehicle 10 on the optical measurement device 202 and improves the measurement precision and reliability. The survey unit 200 further comprises a levelling mechanism configured to level the position of the survey unit 200 on the standing surface on which the survey unit 200 can be positioned. The levelling mechanism is a vibrator device 206 mounted on the survey unit 200 and is configured to vibrate the survey unit 200 so that the survey unit 200 achieves a stable position on the standing surface. Additionally, the lever arm 21 has one or more flange rings 25 encompassing the coupling means or cylindrical bodies 204 of the survey unit 200 and is configured to exert a force on the survey unit 200 to press the survey unit 200 into the standing surface. Each flange ring 25 or the lever arm 21 may comprise one or more pressure sensors (not shown) so that the lever arm 21 can adjust the exerted force on the survey unit 200. The vibrator device 206 and the lever arm 21 with the one or more flange rings 25 can provide a firm stand of the survey unit on the standing surface or floor surface of the mine and reduce the risk of an uncontrolled sinking of the survey unit into a layer of debris on the standing surface. Hence, there is no need to prepare the standing surface for the survey unit, for example by cleaning the surface from debris, or by preparing rails or other guiding structures.

Numerous modifications may be applied to the embodiments described without departing from the scope of the invention which is defined by the appended claims.

### LIST OF REFERENCE SIGNS

| | |
|---|---|
| 10 | mining vehicle |
| 11, 21 | lever arm |
| 12, 14 | second plurality of prisms |
| 13 | lifting platform |
| 15 | extensions of the lifting platform |
| 16 | borer mining device |
| 18 | movable supply device |
| 25 | flange ring |
| 100, 200 | survey unit |
| 102, 202 | optical measurement device |
| 104 | centering flange |
| 106, 206 | vibrator |
| 108, 208 | platform |
| 110, 210 | automatic tripod |
| 112, 114, 166, 212, 214, 216 | stands |
| 204 | cylindrical extension |

## Claims

1. A survey unit (100, 200) for determining of a position of a mining vehicle (10) or a support vehicle in a mine, the survey unit (100, 200) comprising:
an optical measurement device (102, 202) configured to measure a position of the vehicle (10, 20) in the mine; **characterised in that** the survey unit further comprises:
at least part of a coupling means (104, 204) configured to couple the survey unit (100, 200) to the mining vehicle (10, 20) or the support vehicle so that the survey unit (100, 200) can move in association with the movement of the mining vehicle (10, 20) or the support vehicle in a state of coupling between the survey unit (100, 200) and the mining vehicle (10, 20) or the support vehicle; and
a stand stabilizer mechanism configured to level the position of the survey unit (100, 200) on a standing surface on which the survey unit (100, 200) is positioned so that the survey unit (100, 200) achieves a stable position on the standing surface.

2. The survey unit (100, 200) of claim 1, wherein the stand stabilizer mechanism is one of a levelling mechanism including a vibrator device (106, 206) mounted on the survey unit (100, 200) and configured to vibrate the survey unit (100, 200) so that the survey unit (100, 200) achieves a stable position on the standing surface, a device with moving or rotating parts to move away loose material on the ground so that the survey unit (100, 200) achieves a stable position on the standing surface, and/or a device (15, 25) mounted on the mining vehicle (10, 20) or the support vehicle that is configured to exert a force on the survey unit (100, 200) to press the survey unit (100, 200) into the standing surface so that the survey unit (100, 200) achieves a stable position on the standing surface.

3. The survey unit (100, 200) of claim 1 or 2, wherein the coupling means (104, 204) is configured to mechanically couple the survey unit (100, 200) to the mining vehicle (10, 20) or the support vehicle so that the survey unit (100, 200) is physically connected to the mining vehicle (10, 20) or the support vehicle and can be transposed in the mining vehicle (10, 20) or the support vehicle.

4. The survey unit (100, 200) of anyone of claims 1 to 3, wherein the coupling means is configured to couple the survey unit (100, 200) to the mining vehicle (10, 20) or the support vehicle by an electromagnetic or acoustic signal, the coupling means being configured to communicate with the mining vehicle (10, 20) or the support vehicle.

5. The survey unit (100, 200) of anyone of claims 1 to 4, wherein the survey unit (100, 200) is self-propelled and comprises a distance measurement device configured to maintain a predetermined distance between the survey unit (100, 200) and the mining vehicle (10, 20) or the support vehicle during its movement.

6. The survey unit (100, 200) of anyone of claims 1 to 5, wherein the survey unit further comprises at least one stand (112, 114, 116) configured to be in direct contact with the standing surface on which the survey unit (100, 200) can be positioned when the survey unit (100, 200) is in the decoupled state.

7. The survey unit (100, 200) of claim 6, wherein the at least one stand (112, 114, 116) has the form of a plate or pin and/or is retractable.

8. A system for locating a mining vehicle (10, 20) or a support vehicle in a mine, comprising the survey unit (100, 200) of any one of claims 1 to 7 and the mining vehicle (10, 20) or the support vehicle configured for a coupling with the survey unit (100, 200).

9. The system of claim 8, wherein the mining vehicle (10, 20) or support vehicle comprises a lever arm (11) or cable winch configured to couple with the survey unit (100, 200) and to position it on a standing surface separated from the mining vehicle (10, 20) or the support vehicle.

10. The system of claim 8 or 9, wherein the system further comprises a first plurality of prisms configured for a mounting to a wall or static surface of the mine; and a second plurality of prisms (12, 14) mounted to the mining vehicle (10, 20) or the support vehicle, wherein the optical measurement device (102, 202) is configured to radiate light on one or more prisms of the first plurality of prisms and the second plurality of prisms (12, 14) and to receive light reflected therefrom.

11. The system of anyone of claims 8 - 10, wherein the mining vehicle (10, 20) comprises a movable borer mining device (16) including an excavation head and a movable supply device (18) coupled to the borer mining device (16), wherein the survey unit (100, 200) is configured to determine a position of the mining vehicle (10, 20).

12. A method for locating a mining vehicle (10, 20) in a mine, comprising:
coupling a survey unit (100, 200) to the mining vehicle (10, 20) so that the survey unit (100, 200) moves in association with the movement of the mining vehicle (10, 20) in a state of coupling between the survey unit (100, 200) and the mining vehicle (10, 20), positioning the survey unit (100, 200) on a standing surface separated from the mining vehicle (10, 20);
stabilizing the position of the survey unit (100, 200) on the standing surface on which the survey unit (100, 200) is positioned; and
measuring by the survey unit (100, 200) a position of the mining vehicle (10, 20) in the mine.

13. The method of claim 12, wherein stabilizing the position of the survey unit (100, 200) on the standing surface on which the survey unit (100, 200) is positioned comprises vibrating the survey unit (100, 200) so that the survey unit (100, 200) achieves a stable position on the standing surface, moving away loose material on the ground so that the survey unit (100, 200) achieves a stable position on the standing surface, or exerting a force on the survey unit (100, 200) to press the survey unit (100, 200) into the standing surface.

14. The method of claim 12 or 13, wherein coupling the survey unit (100, 200) to the mining vehicle (10, 20) comprises mechanically coupling the survey unit (100, 200) to the mining vehicle (10, 20) so that the survey unit (100, 200) is physically connected to the mining vehicle (10, 20) and is positioned in the mining vehicle (10, 20).

15. The method of anyone of claims 12 - 14, wherein coupling the survey unit (100, 200) to the mining vehicle (10, 20) comprises coupling the survey unit (100, 200) to the mining vehicle (10, 20) by an electromagnetic or acoustic signal and communicating with the mining vehicle (10, 20) via the electromagnetic or acoustic signal.

16. The method of anyone of claims 12 - 15, wherein the survey unit (100, 200) is self-propelled and maintains a predetermined distance between the survey unit (100, 200) and the mining device while moving.

17. The method of anyone of claims 12 - 16, wherein measuring a position of the mining vehicle (10, 20) in the mine includes radiating light by an optical measurement device (102, 202) on one or more prisms of a first plurality of prisms mounted in the mine and on one or more prisms of a second plurality of prisms mounted on the mining vehicle (10, 20) and to receive light reflected therefrom.

## Patentansprüche

1. Vermessungseinheit (100, 200) zum Bestimmen einer Position eines Bergbaufahrzeugs (10) oder eines Begleitfahrzeugs in einem Bergwerk, wobei die Vermessungseinheit (100, 200) umfasst:
eine optische Messvorrichtung (102, 202), die konfiguriert ist, um eine Position des Fahrzeugs (10, 20) in dem Bergwerk zu messen; **dadurch gekennzeichnet, dass** die Vermessungseinheit weiter umfasst:
mindestens einen Teil eines Kopplungsmittels (104, 204), das konfiguriert ist, um die Vermessungseinheit (100, 200) mit dem Bergbaufahrzeug (10, 20) oder dem Begleitfahrzeug zu koppeln, sodass sich die Vermessungseinheit (100, 200) in einem Zustand der Kopplung zwischen der Vermessungseinheit (100, 200) und dem Bergbaufahrzeug (10, 20) oder dem Begleitfahrzeug in Verbindung mit der Bewegung des Bergbaufahrzeugs (10, 20) oder des Begleitfahrzeugs bewegen kann; und
einen Standstabilisierungsmechanismus, der konfiguriert ist, um die Position der Vermessungseinheit (100, 200) auf einer Standoberfläche, auf der die Vermessungseinheit (100, 200) positioniert ist, zu nivellieren, sodass die Vermessungseinheit (100, 200) eine stabile Position auf der Standoberfläche erreicht.

2. Vermessungseinheit (100, 200) nach Anspruch 1, wobei der Standstabilisierungsmechanismus eines von einem Nivelliermechanismus, der eine Vibrationsvorrichtung (106, 206) beinhaltet, die an der Vermessungseinheit (100, 200) montiert, und konfiguriert ist, um die Vermessungseinheit (100, 200) vibrieren zu lassen, sodass die Vermessungseinheit (100, 200) eine stabile Position auf der Standoberfläche erreicht, einer Vorrichtung mit beweglichen oder drehenden Teilen, um loses Material auf dem Boden wegzubewegen, sodass die Vermessungseinheit (100, 200) eine stabile Position auf der Standoberfläche erreicht, und/oder einer am Bergbaufahrzeug (10, 20) oder dem Begleitfahrzeug montierten Vorrichtung (15, 25) ist, die konfiguriert ist, um eine Kraft auf die Vermessungseinheit (100, 200) auszuüben, um die Vermessungseinheit (100, 200) in die Standoberfläche zu drücken, sodass die Vermessungseinheit (100, 200) eine stabile Position auf der Standoberfläche erreicht.

3. Vermessungseinheit (100, 200) nach Anspruch 1 oder 2, wobei das Kopplungsmittel (104, 204) konfiguriert ist, um die Vermessungseinheit (100, 200) mechanisch mit dem Bergbaufahrzeug (10, 20) oder dem Begleitfahrzeug zu koppeln, sodass die Vermessungseinheit (100, 200) physisch mit dem Bergbaufahrzeug (10, 20) oder dem Begleitfahrzeug verbunden ist und in das Bergbaufahrzeug (10, 20) oder das Begleitfahrzeug umgesetzt werden kann.

4. Vermessungseinheit (100, 200) nach einem der Ansprüche 1 bis 3, wobei das Kopplungsmittel konfiguriert ist, um die Vermessungseinheit (100, 200) durch ein elektromagnetisches oder akustisches Signal mit dem Bergbaufahrzeug (10, 20) oder dem Begleitfahrzeug zu koppeln, wobei das Kopplungsmittel konfiguriert ist, um mit dem Bergbaufahrzeug (10, 20) oder dem Begleitfahrzeug zu kommunizieren.

5. Vermessungseinheit (100, 200) nach einem der Ansprüche 1 bis 4, wobei die Vermessungseinheit (100, 200) selbstfahrend ist und eine Abstandsmessvorrichtung umfasst, die konfiguriert ist, um während seiner Bewegung einen vorbestimmten Abstand zwischen der Vermessungseinheit (100, 200) und dem Bergbaufahrzeug (10, 20) oder dem Begleitfahrzeug zu halten.

6. Vermessungseinheit (100, 200) nach einem der Ansprüche 1 bis 5, wobei die Vermessungseinheit weiter mindestens einen Ständer (112, 114, 116) umfasst, der konfiguriert ist, um sich mit der Standoberfläche, auf der die Vermessungseinheit (100, 200) positioniert werden kann, in direktem Kontakt zu befinden, wenn sich die Vermessungseinheit (100, 200) im entkoppelten Zustand befindet.

7. Vermessungseinheit (100, 200) nach Anspruch 6, wobei der mindestens eine Ständer (112, 114, 116) die Form einer Platte oder eines Stifts aufweist und/oder einziehbar ist.

8. System zum Orten eines Bergbaufahrzeugs (10, 20) oder eines Begleitfahrzeugs in einem Bergwerk, das die Vermessungseinheit (100, 200) nach einem der Ansprüche 1 bis 7 und das Bergbaufahrzeug (10, 20) oder das Begleitfahrzeug umfasst, das für eine Kopplung mit der Vermessungseinheit (100, 200) konfiguriert ist.

9. System nach Anspruch 8, wobei das Bergbaufahrzeug (10, 20) oder Begleitfahrzeug einen Hebelarm (11) oder eine Seilwinde umfasst, der/die konfiguriert ist, um sich mit der Vermessungseinheit (100, 200) zu koppeln und um diese auf einer Standoberfläche zu positionieren, die vom Bergbaufahrzeug (10, 20) oder dem Begleitfahrzeug getrennt ist.

10. System nach Anspruch 8 oder 9, wobei das System weiter eine erste Vielzahl von Prismen umfasst, die zum Montieren an einer Wand oder einer statischen Oberfläche des Bergwerks konfiguriert sind; und eine zweite Vielzahl von Prismen (12, 14), die am Bergbaufahrzeug (10, 20) oder dem Begleitfahrzeug montiert sind, wobei die optische Messvorrichtung (102, 202) konfiguriert ist, um Licht auf ein oder mehrere Prismen der ersten Vielzahl von Prismen und der zweiten Vielzahl von Prismen (12, 14) zu strahlen und davon reflektiertes Licht zu empfangen.

11. System nach einem der Ansprüche 8 - 10, wobei das Bergbaufahrzeug (10, 20) eine bewegliche Bohrbergbauvorrichtung (16) beinhaltet, die einen Aushubkopf und eine bewegliche Versorgungsvorrichtung (18) umfasst, die mit der Bohrbergbauvorrichtung (16) gekoppelt ist, wobei die Vermessungseinheit (100, 200) konfiguriert ist, um eine Position des Bergbaufahrzeugs (10, 20) zu bestimmen.

12. Verfahren zum Orten eines Bergbaufahrzeugs (10, 20) in einem Bergwerk, umfassend:
Koppeln einer Vermessungseinheit (100, 200) an das Bergbaufahrzeug (10, 20), sodass sich die Vermessungseinheit (100, 200) in einem Zustand der Kopplung zwischen der Vermessungseinheit (100, 200) und dem Bergbaufahrzeug (10, 20) in Verbindung mit der Bewegung des Bergbaufahrzeugs (10, 20) bewegt,
Positionieren der Vermessungseinheit (100, 200) auf einer Standoberfläche, die vom Bergbaufahrzeug (10, 20) getrennt ist;
Stabilisieren der Position der Vermessungseinheit (100, 200) auf der Standoberfläche, auf der die Vermessungseinheit (100, 200) positioniert ist; und
Messen einer Position des Bergbaufahrzeugs (10, 20) im Bergwerk durch die Vermessungseinheit (100, 200).

13. Verfahren nach Anspruch 12, wobei Stabilisieren der Position der Vermessungseinheit (100, 200) auf der Standoberfläche, auf der die Vermessungseinheit (100, 200) positioniert ist, Vibrieren der Vermessungseinheit (100, 200), sodass die Vermessungseinheit (100, 200) eine stabile Position auf der Standoberfläche erreicht, Wegbewegen von losem Material auf dem Boden, sodass die Vermessungseinheit (100, 200) eine stabile Position auf der Standoberfläche erreicht, oder Ausüben einer Kraft auf die Vermessungseinheit (100, 200) umfasst, um die Vermessungseinheit (100, 200) in die Standoberfläche zu drücken.

14. Verfahren nach Anspruch 12 oder 13, wobei Koppeln der Vermessungseinheit (100, 200) mit dem Bergbaufahrzeug (10, 20) mechanisches Koppeln der Vermessungseinheit (100, 200) mit dem Bergbaufahrzeug (10, 20) umfasst, sodass die Vermessungseinheit (100, 200) physisch mit dem Bergbaufahrzeug (10, 20) verbunden und im Bergbaufahrzeug (10, 20) positioniert ist.

15. Verfahren nach einem der Ansprüche 12 - 14, wobei Koppeln der Vermessungseinheit (100, 200) mit dem Bergbaufahrzeug (10, 20) Koppeln der Vermessungseinheit (100, 200) durch ein elektromagnetisches oder akustisches Signal mit dem Bergbaufahrzeug (10, 20) und Kommunizieren über das elektromagnetische oder akustische Signal mit dem Bergbaufahrzeug (10, 20) umfasst.

16. Verfahren nach einem der Ansprüche 12 - 15, wobei die Vermessungseinheit (100, 200) selbstfahrend ist und während der Bewegung einen vorbestimmten Abstand zwischen der Vermessungseinheit (100, 200) und der Bergbauvorrichtung hält.

17. Verfahren nach einem der Ansprüche 12 - 16, wobei Messen einer Position des Bergbaufahrzeugs (10, 20) im Bergwerk das Strahlen von Licht durch eine optische Messvorrichtung (102, 202) auf ein oder mehrere Prismen einer ersten Vielzahl von Prismen, die in dem Bergwerk montiert sind, und auf ein oder mehrere Prismen einer zweiten Vielzahl von Prismen, die an dem Bergbaufahrzeug (10, 20) montiert sind, und davon reflektiertes Licht zu empfangen, beinhaltet.

## Revendications

1. Unité d'étude (100, 200) permettant de déterminer une position d'un véhicule d'exploitation minière (10) ou d'un véhicule de soutien dans une mine, l'unité d'étude (100, 200) comprenant :
un dispositif de mesure optique (102, 202) configuré pour mesurer une position du véhicule (10, 20) dans la mine ; **caractérisé en ce que** l'unité d'étude comprend en outre :
au moins une partie d'un moyen de couplage (104, 204) configuré pour coupler l'unité d'étude (100, 200) au véhicule d'exploitation minière (10, 20) ou au véhicule de soutien de sorte que l'unité d'étude (100, 200) puisse se déplacer en association avec le mouvement du véhicule d'exploitation minière (10, 20) ou du véhicule de soutien dans un état de couplage entre l'unité d'étude (100, 200) et le véhicule d'exploitation minière (10, 20) ou le véhicule de soutien ; et
un mécanisme stabilisateur de support configuré pour niveler la position de l'unité d'étude (100, 200) sur une surface d'appui sur laquelle l'unité d'étude (100, 200) est positionnée de sorte que l'unité d'étude (100, 200) atteigne une position stable sur la surface d'appui.

2. Unité d'étude (100, 200) selon la revendication 1, dans laquelle le mécanisme stabilisateur de support est un mécanisme de nivellement incluant un dispositif vibrateur (106, 206) monté sur l'unité d'étude (100, 200) et configuré pour faire vibrer l'unité d'étude (100, 200) de sorte que l'unité d'étude (100, 200) atteigne une position stable sur la surface d'appui, un dispositif avec des pièces mobiles ou rotatives pour éloigner les matériaux en vrac sur le sol de sorte que l'unité d'étude (200) atteigne une position stable sur la surface d'appui et/ou sur un dispositif (15, 25) monté sur le véhicule d'exploitation minière (10, 20) ou le véhicule de soutien qui est configuré pour exercer une force sur l'unité d'étude (100, 200) afin de pousser l'unité d'étude (100, 200) dans la surface d'appui de sorte que l'unité d'étude (100, 200) atteigne une position stable sur la surface d'appui.

3. Unité d'étude (100, 200) selon la revendication 1 ou 2, dans laquelle le moyen de couplage (104, 204) est configuré pour coupler mécaniquement l'unité d'étude (100, 200) au véhicule d'exploitation minière (10, 20) ou au véhicule de soutien de sorte que l'unité d'étude (100, 200) soit physiquement connectée au véhicule d'exploitation minière (10, 20) ou au véhicule de soutien et puisse être transposée dans le véhicule d'exploitation minière (10, 20) ou le véhicule de soutien.

4. Unité d'étude (100, 200) selon l'une quelconque des revendications 1 à 3, dans laquelle le moyen de couplage est configuré pour coupler l'unité d'étude (100, 200) au véhicule d'exploitation minière (10, 20) ou au véhicule de soutien par un signal électromagnétique ou acoustique, le moyen de couplage étant configuré pour communiquer avec le véhicule d'exploitation minière (10, 20) ou le véhicule de soutien.

5. Unité d'étude (100, 200) selon l'une quelconque des revendications 1 à 4, dans laquelle l'unité d'étude (100, 200) est automotrice et comprend un dispositif de mesure de distance configuré pour maintenir une distance prédéterminée entre l'unité d'étude (100, 200) et le véhicule d'exploitation minière (10, 20) ou le véhicule de soutien pendant son déplacement.

6. Unité d'étude (100, 200) selon l'une quelconque des revendications 1 à 5, dans laquelle l'unité d'étude comprend en outre au moins un support (112, 114, 116) configuré pour être en contact direct avec la surface d'appui sur laquelle l'unité d'étude (100, 200) peut être positionnée lorsque l'unité d'étude (100, 200) est à l'état découplé.

7. Unité d'étude (100, 200) selon la revendication 6, dans laquelle le au moins un support (112, 114, 116) présente la forme d'une plaque ou d'une broche et/ou est rétractable.

8. Système de localisation d'un véhicule d'exploitation minière (10, 20) ou d'un véhicule de soutien dans une mine comprenant l'unité d'étude (100, 200) selon l'une quelconque des revendications 1 à 7 et le véhicule d'exploitation minière (10, 20) ou le véhicule de soutien configuré pour un couplage avec l'unité d'étude (100, 200).

9. Système selon la revendication 8, dans lequel le véhicule d'exploitation minière (10, 20) ou le véhicule de soutien comprend un bras de levier (11) ou un treuil à câble configuré pour se coupler à l'unité d'étude (100, 200) et pour la positionner sur une surface d'appui séparée du véhicule d'exploitation minière (10, 20) ou du véhicule de soutien.

10. Système selon la revendication 8 ou 9, dans lequel le système comprend en outre une première pluralité de prismes configurés pour un montage sur une paroi ou une surface statique de la mine ; et une seconde pluralité de prismes (12, 14) montés sur le véhicule d'exploitation minière (10, 20) ou le véhicule de soutien, dans lequel le dispositif de mesure optique (102, 202) est configuré pour diffuser de la lumière sur un ou plusieurs prismes de la première pluralité de prismes et de la seconde pluralité de prismes (12, 14) et pour recevoir la lumière réfléchie par ceux-ci.

11. Système selon l'une quelconque des revendications 8-10, dans lequel le véhicule d'exploitation minière (10, 20) comprend un dispositif d'exploitation minière à foreuse mobile (16) incluant une tête d'excavation et un dispositif d'alimentation mobile (18) couplé au dispositif d'exploitation minière à foreuse (16), dans lequel l'unité d'étude (100, 200) est configurée pour déterminer une position du véhicule d'exploitation minière (10, 20).

12. Procédé de localisation d'un véhicule d'exploitation minière (10, 20) dans une mine, comprenant :
le couplage d'une unité d'étude (100, 200) au véhicule d'exploitation minière (10, 20) de sorte que l'unité d'étude (100, 200) se déplace en association avec le mouvement du véhicule d'exploitation minière (10, 20) dans un état de couplage entre l'unité d'étude (100, 200) et le véhicule d'exploitation minière (10, 20),
le positionnement de l'unité d'étude (100, 200) sur une surface d'appui séparée du véhicule d'exploitation minière (10, 20) ;
la stabilisation de la position de l'unité d'étude (100, 200) sur la surface d'appui sur laquelle l'unité d'étude (100, 200) est positionnée ; et
la mesure par l'unité d'étude (100, 200) d'une position du véhicule d'exploitation minière (10, 20) dans la mine.

13. Procédé selon la revendication 12, dans lequel la stabilisation de la position de l'unité d'étude (100, 200) sur la surface d'appui sur laquelle l'unité d'étude (100, 200) est positionnée comprend la vibration de l'unité d'étude (100, 200) de sorte que l'unité d'étude (100, 200) atteigne une position stable sur la surface d'appui, l'éloignement de matériaux en vrac sur le sol de sorte que l'unité d'étude (100, 200) atteigne une position stable sur la surface d'appui, ou l'exercice d'une force sur l'unité d'étude (100, 200) pour pousser l'unité d'étude (100, 200) dans la surface d'appui.

14. Procédé selon la revendication 12 ou 13, dans lequel le couplage de l'unité d'étude (100, 200) au véhicule d'exploitation minière (10, 20) comprend le couplage mécanique de l'unité d'étude (100, 200) au véhicule d'exploitation minière (10, 20) de sorte que l'unité d'étude (100, 200) soit physiquement connectée au véhicule d'exploitation minière (10, 20) et soit positionnée dans le véhicule d'exploitation minière (10, 20).

15. Procédé selon l'une quelconque des revendications 12-14, dans lequel le couplage de l'unité d'étude (100, 200) au véhicule d'exploitation minière (10, 20) comprend le couplage de l'unité d'étude (100, 200) au véhicule d'exploitation minière (10, 20) par un signal électromagnétique ou acoustique et la communication avec le véhicule d'exploitation minière (10, 20) par l'intermédiaire du signal électromagnétique ou acoustique.

16. Procédé selon l'une quelconque des revendications 12-15, dans lequel l'unité d'étude (100, 200) est automotrice et maintient une distance prédéterminée entre l'unité d'étude (100, 200) et le dispositif d'exploitation minière pendant son déplacement.

17. Procédé selon l'une quelconque des revendications 12-16, dans lequel la mesure d'une position du véhicule d'exploitation minière (10, 20) dans la mine inclut la diffusion de lumière par un dispositif de mesure optique (102, 202) sur un ou plusieurs prismes d'une première pluralité de prismes montés dans la mine et sur un ou plusieurs prismes d'une seconde pluralité de prismes montés sur le véhicule d'exploitation minière (10, 20) et pour recevoir la lumière réfléchie par ceux-ci.
